# FASCICULE DE BREVET EUROPEEN

(11) **EP 4 416 112 B1**
(45) Date de publication et mention de la délivrance du brevet: **21.05.2025**
(21) Numéro de dépôt: 22802063.2
(22) Date de dépôt: 10.10.2022
(51) Int. Cl.: C03C 8/16, C03C 14/00, C03C 17/36, C03C 27/10

(54) **PROCÉDÉ D'OBTENTION D'UN VITRAGE BOMBÉ FEUILLETÉ**
VERFAHREN ZUR HERSTELLUNG EINER GEKRÜMMTEN LAMINIERTEN VERGLASUNG
METHOD FOR OBTAINING CURVED LAMINATED GLAZING

(30) Priorité: 12.10.2021 FR 2110796
(43) Date de publication de la demande: 21.08.2024
(73) Titulaire: Saint-Gobain Sekurit France, 60150 Thourotte (FR)
(72) Inventeur: TAN, Jun, Shanghai 201100 (CN); JAMART, Juliette, 60200 Compiègne (FR); FLAMARY-MESPOULIE, Florian, 60200 Compiègne (FR); MA, Jun, Shanghai 201100 (CN)
(74) Mandataire: Saint-Gobain Recherche
(86) Numéro de dépôt international: PCT/EP2022/078075
(87) Numéro de publication internationale: WO 2023/061925

(56) Documents cités:
- WO-A1-2020/150324
- CN-B- 105 565 670

## Description

L'invention se rapporte au domaine des vitrages bombés feuilletés pour véhicules automobiles, par exemple pour toits ou pare-brise, comprenant une feuille de verre revêtue d'un empilement de couches minces et d'une couche d'émail.

Les vitrages feuilletés sont des vitrages dans lesquels deux feuilles de verre sont liées adhésivement au moyen d'un intercalaire de feuilletage. Ce dernier permet en particulier de retenir les éclats de verre en cas de casse, mais apporte aussi d'autres fonctionnalités, en particulier en termes de résistance à l'effraction ou d'amélioration des propriétés acoustiques.

Ces vitrages comprennent souvent des revêtements de divers types, destinés à conférer différentes propriétés.

Des couches d'émail, généralement noir et opaque, sont souvent déposées sur une partie du vitrage, habituellement sous forme d'une bande périphérique destinée à dissimuler et protéger contre le rayonnement ultraviolet les joints polymériques servant à la fixation et au positionnement du vitrage sur la baie de carrosserie. Des zones émaillées dissimulent également les zones de fixation du rétroviseur intérieur et de différents connecteurs et capteurs.

Dans un vitrage feuilleté, ces couches d'émail sont généralement disposées en face 2, les faces étant traditionnellement numérotées à partir de la face destinée à être positionnée à l'extérieur du véhicule. La face 2 est donc une face en contact avec l'intercalaire de feuilletage. L'aspect esthétique de la couche d'émail vue depuis l'extérieur du véhicule revêt une importance particulière pour les constructeurs automobiles. L'émail est généralement obtenu par cuisson au-dessus de 500°C d'une composition comprenant une fritte de verre et des pigments. Une fritte de verre se compose de fines particules d'un verre à bas point de fusion, qui sous l'effet d'un traitement thermique de cuisson se ramollit et adhère à la feuille de verre. On forme ainsi une couche minérale, généralement opaque, à forte résistance chimique et mécanique, adhérant parfaitement au verre en maintenant les particules de pigment. L'étape de cuisson est généralement réalisée simultanément avec le bombage de la feuille de verre.

Dans le contexte de la fabrication de vitrage feuilleté, les deux feuilles de verre du vitrage sont souvent bombées ensemble, la feuille de verre destinée à être positionnée à l'intérieur du véhicule étant généralement disposée au-dessus de l'autre feuille de verre, qui porte l'émail. Dans d'autres procédés, chaque feuille de verre est bombée séparément. Dans tous les cas, il est nécessaire que l'émail possède des propriétés anti-adhésives afin d'empêcher, durant le bombage, tout collage entre les deux feuilles de verre ou entre la feuille de verre et les outils de bombage. Pour ce faire, on emploie habituellement des émaux contenant du bismuth, c'est-à-dire obtenus à partir de frittes de verre contenant de l'oxyde de bismuth.

Des revêtements, généralement sous forme d'empilements de couches minces, peuvent aussi être présents sur une des feuilles de verre du vitrage feuilleté. Il peut notamment s'agir de couches électroconductrices, lesquelles peuvent apporter deux types de fonctionnalités. Les couches électroconductrices peuvent d'une part, lorsque des amenées de courant sont prévues, dissiper de la chaleur par effet Joule. Il s'agit alors de couches chauffantes, utiles par exemple pour le dégivrage ou le désembuage. Ces couches présentent d'autre part, de par leur réflexion du rayonnement infrarouge, des propriétés de contrôle solaire ou de faible émissivité. Les couches sont alors appréciées pour l'amélioration du confort thermique ou pour les économies d'énergie qu'elles apportent, en diminuant la consommation destinée au chauffage ou à la climatisation. Ces empilements de couches sont généralement disposés en face 3 du vitrage feuilleté, donc également en contact avec l'intercalaire de feuilletage.

Il peut toutefois être intéressant, dans certains cas qui seront détaillés par la suite, de disposer la couche d'émail et l'empilement de couches minces sur la même feuille de verre, et donc sur la même face de la feuille de verre en question afin que ces revêtements soient protégés à l'intérieur du vitrage feuilleté.

Il a toutefois été observé que lorsqu'une feuille de verre revêtue d'un empilement de couches minces devait être pourvue d'une couche d'émail, des interactions indésirables pouvaient se produire lors du bombage entre l'empilement et l'émail, conduisant notamment à une dégradation de l'aspect esthétique de l'émail. Il a notamment été observé, en particulier lorsque l'empilement contenait au moins une couche de nitrure et que l'émail contenait du bismuth, que des bulles se créaient au sein de l'émail, près de l'interface entre ce dernier et l'empilement, occasionnant une baisse significative d'adhésion de l'émail, modifiant son aspect optique (en particulier la couleur côté verre, c'est-à-dire du côté opposé à l'émail) et réduisant sa résistance chimique, en particulier aux acides.

Plusieurs solutions ont été proposées à ce problème.

Il est possible de retirer au préalable l'empilement de couches minces aux endroits où la couche d'émail doit être déposée, par exemple au moyen d'abrasifs, afin que l'émail soit déposé au contact direct de la feuille de verre et d'éviter tous problèmes d'adhésion entre la couche d'émail et l'empilement de couches minces. L'abrasion mécanique génère toutefois des rayures visibles, y compris au niveau de la couche d'émail.

La demande WO2014/133929 et avant elle la demande WO0029346 ont proposé l'idée d'utiliser pour l'émail des frittes de verre spéciales capables lors de la cuisson ou d'une pré-cuisson de dissoudre l'empilement de couches minces pour se fixer directement au verre. De tels émaux ne possèdent toutefois pas de bonnes propriétés anti-adhésives, entraînant durant le bombage un collage des deux feuilles de verre entre elles.

La demande WO 2019/106264 propose quant à elle de modifier l'empilement de couches minces en ajoutant une couche d'oxyde entre l'empilement et l'émail comprenant du bismuth. Il n'est toutefois pas toujours possible de procéder à une telle modification.

WO 2020/150324 A1 (D1) divulgue un vitrage de véhicule bombé comprenant un empilement multicouche et une couche d'émail comprenant des particules d'argent, recouvrant partiellement l'empilement multicouche

L'invention a pour but d'obvier à ces inconvénients.

A cet effet, l'invention a pour objet un procédé d'obtention d'un vitrage bombé feuilleté, notamment pour pare-brise ou toit de véhicule automobile, comprenant les étapes successives suivantes :
a. la fourniture d'une première feuille de verre, revêtue sur au moins une partie d'une de ses faces d'un empilement de couches minces,
b. une étape de dépôt, sur une partie de la surface de l'empilement de couches minces, d'une couche d'émail, le dépôt étant réalisé par sérigraphie d'une composition d'émail comprenant de 1 à 15% en poids de particules d'oxyde de zinc ayant une distribution granulométrique en volume telle que le d90 est d'au plus 5 µm,
c. une étape de bombage de la première feuille de verre , l'empilement de couches minces situé sous la couche d'émail étant totalement dissout par ladite couche d'émail au moins à l'issue de cette étape, puis
d. une étape de feuilletage de ladite première feuille de verre avec une feuille de verre supplémentaire au moyen d'un intercalaire de feuilletage, de sorte que la couche d'émail soit tournée vers ledit intercalaire.

L'invention a aussi pour objet un vitrage bombé feuilleté, notamment pour pare-brise ou toit de véhicule automobile, obtenu ou susceptible d'être obtenu par ce procédé. Ce vitrage comprend une première feuille de verre revêtue sur au moins une partie d'une de ses faces d'un empilement de couches minces revêtu sur une partie de sa surface d'une couche d'émail comprenant des particules d'oxyde de zinc ayant une distribution granulométrique en volume telle que le d90 est d'au plus 5 µm, ladite première feuille de verre étant feuilletée avec une feuille de verre supplémentaire au moyen d'un intercalaire de feuilletage, ladite couche d'émail étant tournée vers ledit intercalaire de feuilletage.

L'utilisation de particules d'oxyde de zinc permet de réduire la fragilisation mécanique du verre par l'émail et d'améliorer les propriétés optiques de l'émail, tout en réduisant le risque de collage pendant le bombage, soit entre les deux feuilles de verre soit entre la feuille de verre et les outils de bombage, selon le procédé de bombage utilisé.

Dans le présent texte, l'empilement de couches minces et la couche d'émail sont qualifiés collectivement « les revêtements ».

### Etape a

La première feuille de verre peut être plane ou bombée. La première feuille de verre est généralement plane au moment du dépôt de l'empilement de couches minces puis de la couche d'émail, et est ensuite bombée lors de l'étape c. La première feuille de verre est donc bombée dans le vitrage feuilleté bombé selon l'invention.

Le verre de la première feuille de verre est typiquement un verre silico-sodo-calcique, mais d'autres verres, par exemple des borosilicates ou des aluminosilicates peuvent également être employés. La première feuille de verre est de préférence obtenue par flottage, c'est-à-dire par un procédé consistant à déverser du verre fondu sur un bain d'étain en fusion.

La première feuille de verre peut être en verre clair ou en verre teinté, de préférence en verre teinté, par exemple en vert, gris ou bleu. Pour ce faire, la composition chimique de la première feuille de verre comprend avantageusement de l'oxyde de fer, en une teneur pondérale allant de 0,5 à 2%. Elle peut également comprendre d'autres agents colorants, tels que par exemple l'oxyde de cobalt, l'oxyde de chrome, l'oxyde de nickel, l'oxyde d'erbium, ou encore le sélénium.

La première feuille de verre présente de préférence une épaisseur comprise dans un domaine allant de 0,7 à 19 mm, notamment de 1 à 10 mm, particulièrement de 2 à 6 mm, voire de 2 à 4 mm.

Les dimensions latérales de la première feuille de verre (et de la feuille de verre supplémentaire) sont à adapter en fonction de celles du vitrage feuilleté auquel elle est destinée à être intégrée. La première feuille de verre (et/ou la feuille de verre supplémentaire) présente de préférence une surface d'au moins 1 m².

La première feuille de verre est de préférence revêtue de l'empilement de couches minces sur au moins 70%, notamment sur au moins 90%, voire sur la totalité de la surface de la face de la feuille de verre. Certaines zones peuvent ne pas être revêtues afin notamment de ménager des fenêtres de communication laissant passer les ondes.

L'empilement est de préférence revêtu par la couche d'émail sur 2 à 25%, notamment 3 à 20%, voire 5 à 15% de sa surface. La couche d'émail comprend de préférence une bande périphérique, c'est-à-dire une bande refermée sur elle-même qui, de chaque point de la périphérie de la première feuille de verre, s'étend vers l'intérieur de la première feuille de verre sur une certaine largeur, généralement variable, typiquement comprise entre 1 et 20 cm selon les zones du vitrage final.

L'empilement de couches minces est de préférence au contact de la feuille de verre. Lors de son dépôt, la couche d'émail est de préférence au contact de l'empilement de couches minces.

Par « contact », on entend dans le présent texte un contact physique. Par l'expression « à base de » on entend de préférence le fait que la couche en question comprend au moins 50% en poids du matériau considéré, notamment 60%, voire 70% et même 80% ou 90%. La couche peut même essentiellement consister ou consister en ce matériau. Par « essentiellement consister », il faut comprendre que la couche peut comprendre des impuretés sans influence sur ses propriétés. Les termes « oxyde » ou « nitrure » ne signifient pas nécessairement que les oxydes ou nitrures sont stœchiométriques. Ils peuvent en effet être sous-stœchiométriques, sur-stœchiométriques ou stœchio-métriques.

L'empilement comprend de préférence au moins une couche à base d'un nitrure. Le nitrure est notamment un nitrure d'au moins un élément choisi parmi l'aluminium, le silicium, le zirconium, le titane. Elle peut comprendre un nitrure d'au moins deux ou trois de ces éléments, par exemple un nitrure de silicium et de zirconium, ou un nitrure de silicium et d'aluminium. De façon préférée, la couche à base d'un nitrure est une couche à base de nitrure de silicium, plus particulièrement une couche consistant essentiellement en un nitrure de silicium. Lorsque la couche de nitrure de silicium est déposée par pulvérisation cathodique elle contient généralement de l'aluminium, car il est d'usage de doper les cibles de silicium par de l'aluminium afin d'accélérer les vitesses de dépôt.

La couche à base d'un nitrure présente de préférence une épaisseur physique comprise dans un domaine allant de 2 à 100 nm, notamment de 5 à 80 nm.

Les couches à base de nitrure sont couramment employées dans nombre d'empilements de couches minces car elles possèdent des propriétés de blocage avantageuses, en ce sens qu'elles évitent l'oxydation d'autres couches présentes dans l'empilement, notamment des couches fonctionnelles qui seront décrites ci-après.

L'empilement comprend de préférence au moins une couche fonctionnelle, notamment une couche fonctionnelle électro-conductrice. La couche fonctionnelle est de préférence comprise entre deux couches minces diélectriques, dont une au moins est une couche à base de nitrure. D'autres couches diélectriques possibles sont par exemple des couches d'oxydes ou d'oxynitrures.

Au moins une couche fonctionnelle électro-conductrice est avantageusement choisie parmi :
- les couches métalliques, notamment en argent ou en niobium, voire en or, et
- les couches d'un oxyde transparent conducteur, notamment choisi parmi l'oxyde d'indium et d'étain, les oxydes d'étain dopés (par exemple au fluor ou à l'antimoine) et les oxydes de zinc dopés (par exemple à l'aluminium ou au gallium).

Ces couches sont particulièrement appréciées pour leur faible émissivité, qui confère aux vitrages d'excellentes propriétés d'isolation thermique. Dans les vitrages équipant les véhicules terrestres, notamment automobiles, ferroviaires, ou encore les véhicules aériens ou maritimes, les vitrages bas-émissifs permettent par temps chaud de réfléchir vers l'extérieur une partie du rayonnement solaire, et donc de limiter l'échauffement de l'habitacle desdits véhicules, et le cas échéant de réduire les dépenses de climatisation. A l'inverse, par temps froid, ces vitrages permettent de conserver la chaleur au sein de l'habitacle, et par conséquent de réduire l'effort énergétique de chauffage. Il en est de même dans le cas des vitrages équipant les bâtiments.

Selon un mode de réalisation préféré, l'empilement de couches minces comprend au moins une couche d'argent, notamment une, deux ou trois, voire quatre couches d'argent. L'épaisseur physique de la couche d'argent ou le cas échéant la somme des épaisseurs des couches d'argent est de préférence comprise entre 2 et 50 nm, notamment entre 3 et 40 nm.

Selon un autre mode de réalisation préféré, l'empilement de couches minces comprend au moins une couche d'oxyde d'indium et d'étain. Son épaisseur physique est de préférence comprise entre 30 et 200 nm, notamment entre 40 et 150 nm.

Afin de protéger la ou chaque couche mince électroconductrice (qu'elle soit métallique ou à base d'oxyde transparent conducteur) durant l'étape de bombage, chacune de ces couches est de préférence encadrée par au moins deux couches diélectriques. Les couches diélectriques sont de préférence à base d'oxyde, de nitrure et/ou d'oxynitrure d'au moins un élément choisi parmi le silicium, l'aluminium, le titane, le zinc, le zirconium et l'étain.

Au moins une partie de l'empilement de couches minces peut être déposée par diverses techniques connues, par exemple par dépôt chimique en phase vapeur (CVD), ou par pulvérisation cathodique, notamment assistée par champ magnétique (procédé magnétron).

L'empilement de couches minces est de préférence déposée par pulvérisation cathodique, notamment assistée par champ magnétique. Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur la feuille de verre en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler la feuille de verre sous différentes cibles, ce généralement dans un seul et même dispositif.

Les empilements précités possèdent des propriétés de conduction de l'électricité et de réflexion de l'infrarouge utiles pour procurer une fonction de chauffage (dégivrage, désembuage) et/ou une fonction d'isolation thermique.

Lorsque l'empilement de couches minces est destiné à procurer une fonction de chauffage, des amenées de courant doivent être prévues. Il peut notamment s'agir de bandes en pâte d'argent déposées par sérigraphie sur l'empilement de couches minces, au niveau de deux bords opposés de la feuille de verre.

### Etape b

Dans le présent texte on qualifie de « composition d'émail » la composition liquide qui est utilisée pour déposer lors de l'étape b une couche d'émail humide. Le terme « couche d'émail » est utilisé pour qualifier la couche à chaque étape du procédé, aussi bien la couche humide (avant une éventuelle pré-cuisson, le cas échéant avant séchage) que la couche finale (après cuisson).

Lors de l'étape b, la couche d'émail est de préférence déposée à partir d'une composition d'émail comprenant au moins un pigment, au moins une fritte de verre ainsi que les particules d'oxyde de zinc. La composition d'émail, comme la couche d'émail, ne comprend de préférence pas d'oxyde de plomb.

La composition d'émail comprend généralement en outre un médium organique, destiné à faciliter l'application de la composition sur le substrat ainsi que son adhésion temporaire à ce dernier, et qui est éliminé lors le cas échéant de la pré-cuisson ou lors de la cuisson de l'émail. Le médium comprend typiquement des solvants, des diluants, des huiles et/ou des résines.

La fritte de verre est apte à dissoudre l'empilement de couches sous-jacent. De préférence la fritte de verre est à base de borosilicate (ou de borate) de bismuth et de zinc. Lorsque l'on souhaite que l'émail soit capable de dissoudre l'empilement de couches minces durant la pré-cuisson ou la cuisson, comme décrit plus en détail dans la suite du texte, les teneurs en bismuth et/ou en bore sont de préférence plus élevées que celles des frittes de verre habituellement employées afin de la rendre plus « agressive » vis-à-vis de l'empilement de couches.

Les pigments comprennent de préférence un ou plusieurs oxydes choisis parmi les oxydes de chrome, de cuivre, de fer, de manganèse, de cobalt et de nickel. Il peut s'agir à titre d'exemple de chromates de cuivre et/ou de fer.

Par « particules d'oxyde de zinc » on entend des particules constituées ou essentiellement constituées d'oxyde de zinc (des impuretés pouvant éventuellement être présentes). Ce terme ne couvre donc pas les particules de fritte de verre, laquelle peut contenir dans sa composition de l'oxyde zinc.

Par « d90 » on entend classiquement la valeur telle que 90% des particules (en volume) ont une taille inférieure à cette valeur. La distribution granulométrique en volume des particules est de préférence déterminée par granulométrie laser.

De préférence, les particules d'oxyde de zinc ont une distribution granulométrique en volume telle que le d90 est d'au plus 3 µm, notamment d'au plus 1 µm.

De préférence, les particules d'oxyde de zinc ont une distribution granulométrique en volume telle que le d50 est compris entre 200 et 900 nm, notamment entre 300 et 800 nm.

La teneur en particules d'oxyde de zinc dans la composition d'émail est de préférence comprise entre 2 et 10% en poids, notamment entre 3 et 8% en poids.

Avantageusement, la composition d'émail comprend en outre des particules réfractaires ayant un diamètre d'au moins 20 µm en une proportion volumique d'au moins 0,5%, mais pas de particules ayant un diamètre supérieur à 80 µm.

On entend par « particules réfractaires » des particules dont la morphologie n'est pas significativement affectée lors du bombage. Ces particules doivent posséder une température de fusion ou de ramollissement bien supérieure aux températures subies durant le bombage, et ne doivent pas non plus être dissoutes par la fritte. Les particules réfractaires sont notamment à base d'oxydes métalliques ou de métaux. Les oxydes métalliques sont notamment des oxydes simples, tels que par exemple l'oxyde d'aluminium, de zirconium ou de titane, ou des oxydes complexes tels que des frittes de verre à haut point de fusion ou des pigments inorganiques (ces derniers étant notamment appelés « pigments colorés inorganiques complexes » ou CICP).

La présence d'une proportion suffisante de « grosses » particules réfractaires (donc la taille, aussi appelée diamètre, est d'au moins 20 µm) permet aussi d'empêcher le collage des feuilles de verre entre elles pendant le bombage, ou le collage de la feuille de verre avec les outils de bombage. De par leur taille, les grosses particules réfractaires créent lors du bombage une morphologie dans laquelle les particules forment des pics, la fritte de verre fondue ou ramollie se rassemblant dans les vallées. Cette taille de 20 µm et plus est bien supérieure à celle de la fritte de verre et des pigments classiquement utilisés.

La proportion volumique de particules réfractaires ayant une taille (ou diamètre) de 20 µm et plus est de préférence déterminée par granulométrie laser. Cette proportion est d'au moins 0,5% et de préférence d'au moins 1%, notamment d'au moins 2% et même d'au moins 3%.

De préférence, la composition d'émail contient des particules réfractaires dont le diamètre est d'au moins 30 µm, notamment d'au moins 40 µm, et même d'au moins 50 µm, dans les proportions volumiques susmentionnées.

Une autre manière de détecter aisément la présence de grosses particules, consiste à mesurer la finesse des particules à l'aide d'une jauge Hegman (ou jauge de finesse de broyage). Selon cette méthode, la finesse de la composition d'émail, mesurée à l'aide d'une jauge Hegman, est comprise entre 20 et 80 µm, notamment entre 40 et 60 µm.

De préférence, la composition d'émail ne contient pas de particules (réfractaires ou non) d'un diamètre supérieur à 80 µm afin de permettre un bon dépôt par sérigraphie. La présence de telles particules peut être déterminée par granulométrie laser ou à l'aide d'une jauge Hegman.

Le dépôt de la couche d'émail est réalisé par sérigraphie. Pour ce faire, on dispose sur la feuille de verre un écran de sérigraphie, lequel comprend des mailles dont certaines sont obturées, puis on dépose la composition d'émail sur l'écran, puis on applique un racle afin de forcer la composition d'émail à traverser l'écran dans les zones où les mailles de l'écran ne sont pas obturées, de manière à former une couche d'émail humide. Afin d'assurer un dépôt homogène des grosses particules réfractaires, lorsque la composition d'émail en contient, l'ouverture de maille de l'écran est de préférence d'au moins 40 µm, notamment d'au moins 60 µm, voire d'au moins 70 µm. Une ouverture de maille trop faible va piéger les particules et empêcher leur dépôt homogène, tandis qu'une ouverture trop grande conduit à une épaisseur d'émail trop élevée qui risque d'affaiblir le verre mécaniquement. L'ouverture de maille est de préférence d'au plus 100 µm, notamment d'au plus 80 µm.

L'épaisseur de la couche d'émail humide est de préférence comprise entre 15 et 40 µm, notamment entre 20 et 30 µm.

L'étape b est de préférence immédiatement suivie d'une étape de séchage, destinée à éliminer au moins une partie du solvant contenu dans la composition d'émail. Un tel séchage est typiquement réalisé à une température comprise entre 120 et 180°C.

### Etape c

Le bombage peut notamment être réalisé par gravité (le verre se déformant sous son propre poids) ou par pressage, à des températures allant typiquement de 550 à 650°C.

Selon un premier mode de réalisation, les deux feuilles de verre (première feuille de verre et feuille de verre supplémentaire) sont bombées séparément. Il importe dans ce cas d'éviter tout collage entre la première feuille de verre et les outils de bombage.

Selon un deuxième mode de réalisation, la première feuille de verre et la feuille de verre supplémentaire sont bombées ensemble, la couche d'émail étant tournée vers ladite feuille de verre supplémentaire. Il importe dans ce cas d'éviter tout collage entre les deux feuilles de verre. Les feuilles de verre peuvent être maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium. Lors du bombage, la feuille de verre intérieure (destinée à être positionnée à l'intérieur de l'habitacle), est normalement placée au-dessus de la feuille de verre extérieure. Ainsi, lors de l'étape de bombage, la feuille de verre supplémentaire est placée au-dessus de la première feuille de verre.

De préférence, après l'étape c, la couche d'émail est opaque, de teinte noire. Sa clarté L* mesurée en réflexion côté verre est de préférence inférieure à 5. Il a été observé que l'ajout des particules d'oxyde de zinc permettait de réduire la valeur de la clarté L*, et donc d'obtenir un émail d'un noir plus profond.

Comme indiqué précédemment, la couche d'émail forme avantageusement une bande en périphérie de la première feuille de verre. De la sorte, la couche d'émail est capable de dissimuler et protéger contre le rayonnement ultraviolet des joints, des éléments de connectique, ou encore des capteurs.

### Etape optionnelle de pré-cuisson (b1)

Le procédé comprend de préférence, entre l'étape b) et l'étape c), une étape b1) de pré-cuisson de la couche d'émail durant laquelle l'empilement de couches minces situé sous la couche d'émail est au moins partiellement dissout par ladite couche d'émail.

Cette étape est particulièrement utile dans le deuxième mode de réalisation précédemment décrit, dans lequel la première feuille de verre et la feuille de verre supplémentaire sont bombées ensemble, la couche d'émail étant tournée vers la feuille de verre supplémentaire.

La dissolution de l'empilement de couches minces par l'émail permet d'éviter les interactions susmentionnées. Les éléments constitutifs de l'empilement se trouvent dissous dans la couche d'émail, laquelle se trouve, au moins à l'issue de l'étape de bombage (étape c), au contact direct de la feuille de verre.

Si la couche d'émail n'a pas déjà totalement dissout l'empilement de couches minces à l'issue de la pré-cuisson, cette dissolution totale est obtenue lors du bombage, qui achève la cuisson de l'émail.

La dissolution totale de l'empilement de couches minces peut notamment être observée par microscopie électronique. Des mesures électriques, notamment de résistance carrée, permettent aussi de constater la dissolution de l'empilement.

L'étape de pré-cuisson est de préférence mise en œuvre à une température comprise entre 150 et 800°C, notamment entre 500 et 700°C.

Une telle pré-cuisson permet d'éliminer le médium organique, ou de manière générale tout composant organique éventuellement présent dans la couche d'émail.

Lors de la pré-cuisson, l'empilement de couches minces est de préférence au moins partiellement dissout par la couche d'émail. Selon la température employée et le type d'émail ou d'empilement, l'empilement peut même être totalement dissout par la couche d'émail lors de la pré-cuisson. Alternativement, il peut n'être que partiellement dissout lors de la pré-cuisson, et il est alors totalement dissout lors du bombage (étape c).

### Etape d

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

Comme dit précédemment, la feuille supplémentaire est de préférence la feuille intérieure du vitrage feuilleté, c'est-à-dire la feuille située du côté concave du vitrage, destinée à être positionnée à l'intérieur de l'habitacle du véhicule. De la sorte, les revêtements sont disposés en face 2 du vitrage feuilleté.

La feuille de verre supplémentaire peut être en verre silico-sodo-calcique, ou encore en verre de borosilicate ou d'aluminosilicate. Elle peut être en verre clair ou teinté. Son épaisseur est de préférence comprise entre 0,5 et 4 mm, notamment entre 1 et 3 mm.

Selon un mode de réalisation préféré, la feuille de verre supplémentaire présente une épaisseur comprise entre 0,5 et 1,2 mm. La feuille de verre supplémentaire est notamment en verre d'aluminosilicate de sodium, de préférence renforcé chimiquement. La feuille de verre supplémentaire est de préférence la feuille intérieure du vitrage feuilleté. L'invention est particulièrement utile pour ce type de configuration, pour lequel il est difficile de disposer l'empilement de couches minces en face 3. Le renforcement chimique (aussi appelé « échange ionique ») consiste à mettre en contact la surface du verre avec un sel de potassium fondu (par exemple du nitrate de potassium), de manière à renforcer la surface du verre en échangeant des ions du verre (ici des ions sodium) par des ions de plus grand rayon ionique (ici des ions potassium). Cet échange ionique permet de former des contraintes de compression à la surface du verre et sur une certaine épaisseur. De préférence, la contrainte de surface est d'au moins 300 MPa, notamment 400 et même 500 MPa, et d'au plus 700 MPa, et l'épaisseur de la zone en compression est d'au moins 20 µm, typiquement entre 20 et 50 µm. Le profil de contraintes peut être déterminé de manière connue à l'aide d'un microscope polarisant équipé d'un compensateur de Babinet. L'étape de trempe chimique est de préférence mise en œuvre à une température allant de 380 à 550°C, et pour une durée allant de 30 minutes à 3 heures. Le renforcement chimique est de préférence réalisé après l'étape de bombage mais avant l'étape de feuilletage. Le vitrage obtenu est de préférence un pare-brise de véhicule automobile, en particulier un pare-brise chauffant.

Selon un autre mode de réalisation préféré, la feuille de verre supplémentaire porte sur la face opposée à la face tournée vers l'intercalaire de feuilletage (de préférence la face 4, la feuille supplémentaire étant la feuille intérieure) un empilement de couches minces supplémentaire, notamment un empilement à faible émissivité, comprenant un oxyde transparent conducteur, notamment l'oxyde d'indium et d'étain (ITO). L'invention est aussi particulièrement utile pour ce type de configuration, pour lequel il est délicat de disposer des empilements de couches minces sur les deux faces de la même feuille de verre (face 3 et 4). Dans ce mode de réalisation, l'intercalaire de feuilletage et/ou la feuille de verre supplémentaire est de préférence teinté(e), la feuille de verre portant les revêtements pouvant être en verre clair. Le vitrage obtenu est de préférence un toit de véhicule automobile.

Comme exemple de ce dernier mode de réalisation préféré, on peut citer un toit bombé feuilleté comprenant, depuis l'extérieur du véhicule, une feuille de verre clair revêtue en face 2 d'un empilement de couches minces comprenant au moins une couche d'argent puis d'une couche d'émail, un intercalaire de feuilletage en PVB (de préférence teinté), et une feuille de verre supplémentaire en verre teinté, portant en face 4 un empilement de couches minces à faible émissivité, notamment à base d'ITO.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

### Exemples

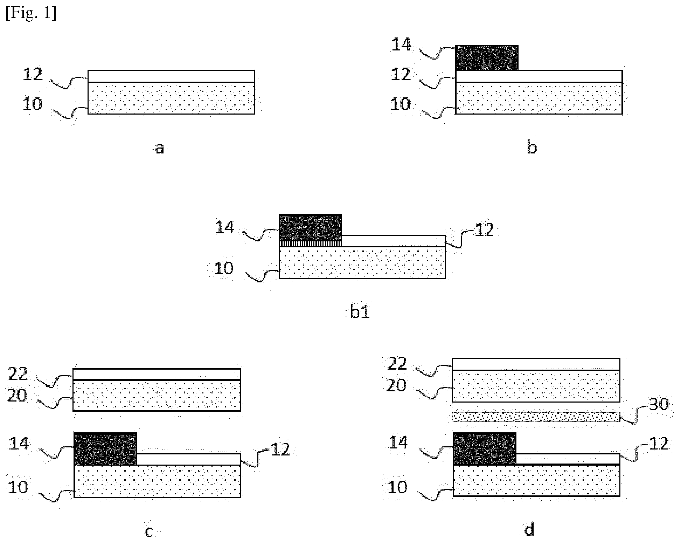

Les exemples de réalisation qui suivent illustrent l'invention de manière non limitative, en lien avec la [Fig.1].

[Fig.1] illustre de manière schématique un mode de réalisation du procédé selon l'invention. Elle représente une coupe schématique d'une partie des feuilles de verre et des éléments déposés sur les feuilles de verre, près de leur périphérie. Les divers éléments ne sont évidemment pas représentés à l'échelle, de manière à pouvoir les visualiser.

La première feuille de verre 10 revêtue de l'empilement de couches minces 12 est fournie dans l'étape a, puis une partie de l'empilement 12 est revêtue par une couche d'émail 14, notamment par sérigraphie (étape b).

L'ensemble subit ensuite une pré-cuisson (étape b1), qui dans le cas représenté, conduit à une dissolution partielle de l'empilement 12 par l'émail 14.

Une feuille de verre supplémentaire 20, ici munie d'un empilement de couches minces supplémentaire 22, est ensuite posée sur la première feuille de verre 10, l'ensemble étant ensuite bombé (étape c). La vue représentée n'étant que celle de l'extrémité de la feuille de verre, le bombage n'est ici pas représenté. Le schéma illustre le fait qu'à l'issue du bombage, l'émail 14 a totalement dissout l'empilement de couches minces 12 sous-jacent.

Dans l'étape d, la première feuille de verre 10 revêtue de l'empilement de couches minces 12 et de la couche d'émail 14 et la feuille de verre supplémentaire 20 revêtue de l'empilement supplémentaire 22 sont assemblées à l'aide de l'intercalaire de feuilletage 30. Le schéma représente ici chacun des éléments séparés, en vue éclatée.

### Première série d'exemples

Le procédé mis en œuvre dans la première série d'exemples correspond au mode de réalisation de la [Fig.1].

Des feuilles de verre clair de 2,1 mm d'épaisseur, préalablement revêtues par pulvérisation cathodique d'un empilement de couches minces comprenant trois couches d'argent protégées par des couches d'oxyde de zinc, des couches de nitrure de silicium et des bloqueurs NiCr, ont été partiellement revêtues par sérigraphie de couches d'émail d'une épaisseur humide de 25 µm.

La composition d'émail comprenait, en plus de la fritte de verre, des pigments noirs et du médium, 5% en poids de grosses particules d'oxyde réfractaire ayant une taille supérieure à 20 µm. Dans un premier exemple selon l'invention, 5% en poids de particules de ZnO (D90 < 1 µm) ont été en outre ajoutées à la composition d'émail.

Le dépôt de la couche d'émail a été réalisé par sérigraphie, puis l'émail a été séché (150°C, 1 à 2 minutes) avant d'être pré-cuit à environ 650-680°C.

Après appairage avec une feuille de verre supplémentaire en verre silico-sodo-calcique teinté muni en face 4 d'un empilement comprenant une couche d'ITO, l'ensemble a été bombé à plus de 600°C pendant 350 à 500 secondes.

Après cuisson, l'esthétique, plus particulièrement la couleur noire vue depuis la face 1, a été évaluée par la mesure de la clarté L* en réflexion (illuminant D65, observateur de référence 10°).

Dans le cas de l'exemple selon l'invention, la valeur de L* obtenue était en moyenne de 4,5, contre 5,1 pour l'exemple comparatif (sans particules de ZnO). L'exemple comparatif présentait en outre un léger flou en réflexion, contrairement à l'exemple selon l'invention.

Pour l'exemple comparatif, environ 25% des verres ont cassé au niveau des coins au moment du bombage, avec un collage observé, ainsi qu'un transfert de l'émail sur le verre opposé. Aune casse n'a en revanche été observée pour l'exemple selon l'invention.

Les vitrages feuilletés ont en outre subi des essais de flexion 3 points. Pour l'exemple comparatif la force à la rupture était de 128 N, contre 172 N pour l'exemple selon l'invention. Les valeurs données sont des valeurs moyennes pour un échantillon de 20 vitrages.

### Deuxième série d'exemples

Les exemples de cette deuxième série d'exemples se distinguent de ceux de la première série en ce que le bombage des deux feuilles de verre a été réalisé séparément, par pressage à une température de 610-630°C.

Comme pour la première série, la composition d'émail comprenait, en plus de la fritte de verre, des pigments noirs et du médium, 5% en poids de grosses particules d'oxyde réfractaire ayant une taille supérieure à 20 µm. Dans un deuxième exemple selon l'invention, 5% en poids de particules de ZnO (D90 < 1 µm) ont été en outre ajoutées à la composition d'émail. Un troisième exemple selon l'invention contenait 10% en poids de telles particules.

Dans le cas de l'exemple comparatif (sans particules de ZnO), un collage du verre à l'outil de bombage a été observé. Tel n'a pas été le cas dans le cas des exemples selon l'invention.

## Revendications

1. Procédé d'obtention d'un vitrage bombé feuilleté, notamment pour pare-brise ou toit de véhicule automobile, comprenant les étapes successives suivantes :
a. la fourniture d'une première feuille de verre (10), revêtue sur au moins une partie d'une de ses faces d'un empilement de couches minces (12),
b. une étape de dépôt, sur une partie de la surface de l'empilement de couches minces (12), d'une couche d'émail (14), le dépôt étant réalisé par sérigraphie d'une composition d'émail comprenant de 1 à 15% en poids de particules d'oxyde de zinc ayant une distribution granulométrique en volume telle que le d90 est d'au plus 5 µm,
c. une étape de bombage de la première feuille de verre (10), l'empilement de couches minces (12) situé sous la couche d'émail (14) étant totalement dissout par ladite couche d'émail (14) au moins à l'issue de cette étape, puis
d. une étape de feuilletage de ladite première feuille de verre (10) avec une feuille de verre supplémentaire (20) au moyen d'un intercalaire de feuilletage (30), de sorte que la couche d'émail (14) soit tournée vers ledit intercalaire (30).

2. Procédé selon la revendication 1, tel que l'empilement de couches minces (12) comprend au moins une couche fonctionnelle, notamment une couche fonctionnelle électro-conductrice.

3. Procédé selon la revendication précédente, dans lequel la couche fonctionnelle électro-conductrice est choisie parmi les couches métalliques, notamment en argent ou en niobium, et les couches d'un oxyde transparent conducteur, notamment choisi parmi l'oxyde d'indium et d'étain, les oxydes d'étain dopés et les oxydes de zinc dopés.

4. Procédé selon l'une des revendications précédentes, tel qu'après l'étape c, la couche d'émail (14) est opaque, de teinte noire, et forme une bande en périphérie de la première feuille de verre (10).

5. Procédé selon l'une des revendications précédentes, tel que les particules d'oxyde de zinc ont une distribution granulométrique en volume telle que le d90 est d'au plus 1 µm.

6. Procédé selon l'une des revendications précédentes, dans lequel les particules d'oxyde de zinc ont une distribution granulométrique en volume telle que le d50 est compris entre 200 et 900 nm, notamment entre 300 et 800 nm.

7. Procédé selon l'une des revendications précédentes, tel que la teneur en particules d'oxyde de zinc dans la composition d'émail est comprise entre 2 et 10% en poids, notamment entre 3 et 8% en poids.

8. Procédé selon l'une des revendications précédentes, dans lequel la composition d'émail comprend en outre des particules réfractaires ayant un diamètre d'au moins 20 µm en une proportion volumique d'au moins 0,5%, mais pas de particules ayant un diamètre supérieur à 80 µm.

9. Procédé selon la revendication précédente, dans lequel les particules réfractaires sont à base d'oxydes métalliques ou de métaux.

10. Procédé selon l'une des revendications précédentes, dans lequel le dépôt de la couche d'émail (14) est réalisé par sérigraphie à l'aide d'un écran de sérigraphie ayant une ouverture de maille d'au moins 40 µm.

11. Procédé selon l'une des revendications précédentes, tel que :
- le procédé comprend entre l'étape b) et l'étape c) une étape b1) de pré-cuisson de la couche d'émail (14) durant laquelle l'empilement de couches minces (12) situé sous la couche d'émail (14) est au moins partiellement dissout par ladite couche d'émail (14), et
- dans l'étape c) la première feuille de verre (10) et la feuille de verre supplémentaire (20) sont bombées ensemble, la couche d'émail (14) étant tournée vers ladite feuille de verre supplémentaire (20).

12. Procédé selon l'une des revendications précédentes, dans lequel la feuille de verre supplémentaire (20) porte, sur la face opposée à la face tournée vers l'intercalaire de feuilletage (30), un empilement de couches minces supplémentaire (22), notamment un empilement à faible émissivité comprenant un oxyde transparent conducteur.

13. Vitrage bombé feuilleté, notamment pour pare-brise ou toit de véhicule automobile, obtenu par le procédé de l'une des revendications précédentes, comprenant une première feuille de verre (10) revêtue sur au moins une partie d'une de ses faces d'un empilement de couches minces (12), ladite première feuille de verre (10) étant revêtue sur une partie de sa surface d'une couche d'émail (14) comprenant des particules d'oxyde de zinc ayant une distribution granulométrique en volume telle que le d90 est d'au plus 5 µm, ladite première feuille de verre (10) étant feuilletée avec une feuille de verre supplémentaire (20) au moyen d'un intercalaire de feuilletage (30), ladite couche d'émail (14) étant tournée vers ledit intercalaire de feuilletage (30).

## Patentansprüche

1. Verfahren zum Erhalten einer gebogenen Verbundverglasung, insbesondere für eine Windschutzscheibe oder ein Dach eines Kraftfahrzeugs, umfassend die folgenden Schritte:
a. Bereitstellen einer ersten Glasscheibe (10), die auf mindestens einem Teil einer ihrer Flächen mit einem Dünnschichtstapel (12) beschichtet ist,
b. einen Schritt eines Aufbringens einer Emailschicht (14) auf einen Teil der Oberfläche des Dünnschichtstapels (12), wobei das Aufbringen durch Siebdruck einer Emailzusammensetzung erfolgt, umfassend zu 1 bis 15 Gew.-% Zinkoxidpartikel, die eine derartige Volumenkorngrößenverteilung aufweisen, dass der d90-Wert höchstens 5 µm beträgt,
c. einen Schritt des Biegens der ersten Glasscheibe (10), wobei der Dünnschichtstapel (12), der sich unter der Emailschicht (14) befindet, mindestens am Ende dieses Schritts vollständig von der Emailschicht (14) aufgelöst wird, dann
d. einen Schritt eines Laminierens der ersten Glasscheibe (10) mit einer zusätzlichen Glasscheibe (20) mittels einer Verbundzwischenlage (30), sodass die Emailschicht (14) der Zwischenlage (30) zugewandt ist.

2. Verfahren nach Anspruch 1, wobei der Dünnschichtstapel (12) mindestens eine Funktionsschicht, insbesondere eine elektrisch leitfähige Funktionsschicht, umfasst.

3. Verfahren nach dem vorstehenden Anspruch, wobei die elektrisch leitfähige Funktionsschicht aus Metallschichten, insbesondere aus Silber oder aus Niob, ausgewählt ist, und Schichten aus einem transparenten leitfähigen Oxid insbesondere aus Indium- und Zinnoxid, dotierten Zinnoxiden und dotierten Zinkoxiden ausgewählt sind.

4. Verfahren nach einem der vorstehenden Ansprüche, wobei nach Schritt c die Emailschicht (14) undurchsichtig ist, einen schwarzen Farbton besitzt und einen Streifen am Rand der ersten Glasscheibe (10) ausbildet.

5. Verfahren nach einem der vorstehenden Ansprüche, wobei die Zinkoxidpartikel eine derartige Volumenkorngrößenverteilung aufweisen, dass der d90-Wert höchstens 1 µm beträgt.

6. Verfahren nach einem der vorstehenden Ansprüche, wobei die Zinkoxidpartikel eine derartige Volumenkorngrößenverteilung derart aufweisen, dass der d50-Wert zwischen 200 und 900 nm, insbesondere zwischen 300 und 800 nm, beträgt.

7. Verfahren nach einem der vorstehenden Ansprüche, wobei der Gehalt an Zinkoxidpartikeln in der Emailzusammensetzung zwischen 2 und 10 Gew.-%, insbesondere zwischen 3 und 8 Gew.-%, beträgt.

8. Verfahren nach einem der vorstehenden Ansprüche, wobei die Emailzusammensetzung ferner feuerfeste Partikel, die einen Durchmesser von mindestens 20 µm aufweisen, in einem Volumenanteil von mindestens 0,5 %, jedoch keine Partikel, die einen Durchmesser von mehr als 80 µm aufweisen, umfasst.

9. Verfahren nach dem vorstehenden Anspruch, wobei die feuerfesten Partikel auf Metalloxiden oder Metallen basieren.

10. Verfahren nach einem der vorstehenden Ansprüche, wobei das Aufbringen der Emailschicht (14) durch Siebdruck mittels eines Siebdrucksiebs, das eine Maschenweite von mindestens 40 µm aufweist, erfolgt.

11. Verfahren nach einem der vorstehenden Ansprüche, wobei:
- das Verfahren zwischen Schritt b) und Schritt c) einen Schritt b1) des Vorbrennens der Emailschicht (14), bei dem der Dünnschichtstapel (12), der sich unter der Emailschicht (14) befindet, mindestens teilweise durch die Emailschicht (14) aufgelöst wird, und
- in Schritt c) die erste Glasscheibe (10) und die zusätzliche Glasscheibe (20) zusammen gebogen werden, wobei die Emailschicht (14) der zusätzlichen Glasscheibe (20) zugewandt ist.

12. Verfahren nach einem der vorstehenden Ansprüche, wobei die zusätzliche Glasscheibe (20) auf der Seite, die der Seite gegenüberliegt, die der Verbundzwischenlage (30) zugewandt ist, einen zusätzlichen Dünnschichtstapel (22), insbesondere einen Stapel mit niedriger Emissivität, umfassend ein leitfähiges transparentes Oxid, trägt.

13. Gebogene Verbundverglasung, insbesondere für eine Windschutzscheibe oder ein Dach eines Kraftfahrzeugs, die durch das Verfahren nach einem der vorstehenden Ansprüche erhalten wird, umfassend eine erste Glasscheibe (10), die auf mindestens einem Teil einer ihrer Flächen mit einem Dünnschichtstapel (12) beschichtet ist, wobei die erste Glasscheibe (10) auf einem Teil ihrer Oberfläche mit einer Emailschicht (14) beschichtet ist, umfassend Zinkoxidpartikel, die eine derartige Volumenkorngrößenverteilung aufweisen, dass der d90-Wert höchstens 5 µm beträgt, wobei die erste Glasscheibe (10) mittels einer Verbundzwischenschicht (30) mit einer zusätzlichen Glasscheibe (20) laminiert ist, wobei die Emailschicht (14) der Verbundzwischenschicht (30) zugewandt ist.

## Claims

1. A method for obtaining a curved laminated glazing unit, especially for a windshield or roof of a motor vehicle, comprising the following successive steps:
a. providing a first glass sheet (10), covered on at least part of one of its surfaces with a stack of thin layers (12),
b. a step of depositing, on a part of the surface of the stack of thin layers (12), a layer of enamel (14), the deposition being carried out by screen-printing an enamel composition comprising 1 to 15% by weight of zinc oxide particles having a particle size distribution by volume such that d90 is at most 5 µm,
c. a step of bending the first glass sheet (10), the stack of thin layers (12) located under the enamel layer (14) being completely dissolved by said enamel layer (14) at least at the end of this step, then
d. a step of laminating said first glass sheet (10) with an additional glass sheet (20) by means of a lamination interlayer (30), so that the enamel layer (14) faces said interlayer (30).

2. The method according to claim 1, such that the stack of thin layers (12) comprises at least one functional layer, especially an electrically conductive functional layer.

3. The method according to the preceding claim, wherein the electrically conductive functional layer is selected from metal layers, especially silver or niobium layers, and layers of a transparent conductive oxide, especially selected from indium tin oxide, doped tin oxides, and doped zinc oxides.

4. The method according to one of the preceding claims, such that after step d, the enamel layer (14) is opaque, has a black hue, and forms a strip at the periphery of the first glass sheet (10).

5. The method according to one of the preceding claims, such that the zinc oxide particles have a particle size distribution by volume such that the d90 is at most 1 µm.

6. The method according to one of the preceding claims, wherein the zinc oxide particles have a particle size distribution by volume such that the d50 is between 200 and 900 nm, especially between 300 and 800 nm.

7. The method according to one of the preceding claims, such that the proportion of zinc oxide particles in the enamel composition is between 2 and 10% by weight, especially between 3 and 8% by weight.

8. The method according to one of the preceding claims, wherein the enamel composition further comprises refractory particles having a diameter of at least 20 µm in a volume proportion of at least 0.5%, but not particles having a diameter greater than 80 µm.

9. The method according to the preceding claim, wherein the refractory particles are based on metal oxides or metals.

10. The method according to one of the preceding claims, wherein the deposition of the enamel layer (14) is carried out by screen printing using a screen printing screen having a mesh opening of at least 40 µm.

11. The method according to one of the preceding claims, such that:
- the method comprises between step b) and step c) a step b1) of pre-firing the enamel layer (14) during which the thin layer stack (12) located under the enamel layer (14) is at least partially dissolved by said enamel layer (14), and
- in step c) the first glass sheet (10) and the additional glass sheet (20) are curved together with the enamel layer (14) facing said additional glass sheet (20).

12. The method according to one of the preceding claims, wherein the additional glass sheet (20) bears, on the face opposite the face which is facing the lamination interlayer (30), an additional stack of thin layers (22), especially a stack with low emissivity comprising a transparent conductive oxide.

13. A laminated curved glazing unit, especially for a windshield or roof of a motor vehicle, obtained by the method of one of the preceding claims, comprising a first glass sheet (10) coated on at least part of one of its faces with a stack of thin layers (12), said first glass sheet (10) being coated on part of its surface with an enamel layer (14) comprising zinc oxide particles having a particle size distribution by volume such that the d90 is at most 5 µm, said first glass sheet (10) being laminated with an additional glass sheet (20) by means of a lamination interlayer (30), said enamel layer (14) facing said lamination interlayer (30).
